# EUROPEAN PATENT APPLICATION

(11) **EP 3 151 221 A1**
(43) Date of publication of application: **05.04.2017**
(21) Application number: 15800452.3
(22) Date of filing: 27.05.2015
(51) Int. Cl.: G09G 3/02, G02B 26/10, G02B 27/01, H04N 5/74

(54) **LIGHT SOURCE DEVICE AND DISPLAY DEVICE**

(30) Priority: 28.05.2014 JP 2014109602; 14.05.2015 JP 2015099327
(71) Applicant: Nippon Seiki Co., Ltd., Nagaoka-shi, Niigata 940-8580 (JP)
(72) Inventor: YAMAKAWA, Yasuhiro, Nagaoka, Niigata (JP); HADA, Makoto, Nagaoka, Niigata (JP)
(74) Representative: Carpmaels & Ransford LLP
(86) International application number: PCT/JP2015/065237
(87) International publication number: WO 2015/182653

(57) **Abstract**

The purpose of the present invention is to enable light having a desired light intensity to be outputted in a broad brightness range spanning from low to high brightness, even if light intensity characteristics of light sources have been changed. Light sources (11) emit inspection light of a fixed output and image light of an output based on an image signal. A light-branching unit (15) branches the light from the light sources (11). A light detection unit (16) detects the light intensity of reflected light (C1) branched by the light-branching unit (15). A signal conversion unit (500) converts a first detection signal (P1) from the light detection unit (16), and outputs the resultant signal as a third detection signal (P3). A main control unit (400) inputs the third detection signal (P3), and controls the output of the image light on the basis of the third detection signal (P3) . A refresh unit (600) refreshes the third detection signal (P3) inputted to the main control unit (400).

## Description

### Technical Field

The present invention relates to a light source device outputting light and a display device generating an image by performing spatial light modulation of the light emitted from the light source device.

### Background Art

Some display devices generate an image by, for example, scanning laser light emitted from a light source device using a scanning unit. In such a light source device, a change in the temperature or the like of a use environment makes a change in the light intensity of light to be emitted, thereby preventing an image generated in the display device to be displayed with desired brightness and color.

There is a known technique that outputs a desired light intensity by detecting the light intensity of the light source device and controlling the light source device based on the detected light intensity in order to solve such a problem.

As illustrated in Fig. 13, PTL 1 discloses a display device in which a scanning unit has a predetermined scan range 701, part of the scan range 701 is provided with an effective scan range 702 that can be visually identified by the user, a photo sensor 800 is disposed in a portion outside the effective scan range 702 within the scan range 701, and a light source device is controlled based on a detection signal detected by the photo sensor 800 when a scanning unit scans light and passes on the photo sensor 800.

In addition, as illustrated in Fig. 14, PTL 2 discloses a display device including a reflection-light transmission unit 910 that receives light 900 from a light source, reflects part of the light as reflected light 901 to the photo sensor 800, and transmits part of the light as transmitted light 902 to a scanning unit so as to constantly input the reflected light 901 of the light 900 output from the light source to the photo sensor 800 and control the light source device based on a detection signal by the photo sensor 800.

### Citation List

### Patent Literature

PTL 1: JP-A-2008-233562
PTL 2: JP-A-2014-086426

### Summary of Invention

### Technical Problem

When the photo sensor 800 is disposed in the scan range 701 as disclosed in PTL 1, the photo sensor 800 can perform light detection only the time period in which the scanning unit scans the surface of the photo sensor 800, so the light detection signal may not be input sufficiently.

In addition, when the photo sensor 800 constantly receives part of the light 900 from the light source as disclosed in PTL 2, if the light source outputs detection light and the photo sensor 800 detects the detection light, the photo sensor 800 may not detect the light intensity accurately because of the effect of the detection signal of the light input to the photo sensor 800 immediately before the detection.

In the case of installation in a vehicle, an image needs to be displayed in the range from high brightness enabling visual identification in a bright daylight environment to low brightness suppressing glare at nighttime. When the light intensity of light input to the photo sensor 800 is low, an amplifying circuit for amplifying the detection signal or an integration circuit may be disposed between the photo sensor 800 and the control unit. However, when such an amplifying circuit or integration circuit is used as described above, the photo sensor 800 is likely to be affected by the detection signal immediately before the detection as described above and improvement is necessary.

Accordingly, the invention provides a display device capable of outputting light having a desired light intensity even when the light intensity characteristics of the light source change in a broad brightness range from low brightness to high brightness, and a display device including the light source device.

### Solution to Problem

The invention adopts the following means to solve the above problem.

That is, a light source device according to a first aspect includes a light source capable of emitting at least image light having output power that is based on an image signal, a light branching unit branching light from the light source, a light detection unit detecting a light intensity of the light branched from the light branching unit, a signal conversion unit converting a detection signal from the light detection unit and outputting the converted signal, a control unit controlling output power of the image light based on the input converted signal, and a refresh unit refreshing the converted signal input to the control unit.

In addition, a display device according to a second aspect includes a light source capable of outputting image light having output power that is based on an image signal and inspection light having fixed output power, a light branching unit branching light from the light source, a light detection unit detecting a light intensity of part of the light branched by the light branching unit, a scanning unit generating an image by receiving part of the light from the light branching unit and scanning the received light, scanning position detection means detecting a scanning position of the scanning unit, a signal conversion unit converting a detection signal from the light detection unit and outputting the converted signal, a control unit receiving the converted signal and controlling output power of the image light based on the converted signal of the inspection light, and a refresh unit refreshing the converted signal input to the control unit at a timing that is based on the scanning position of the scanning unit detected by the scanning position detection means.

In addition, a display device according to a third aspect includes a light source capable of emitting at least image light having output power that is based on an image signal, a light branching unit branching light from the light source, a light detection unit detecting a light intensity of part of the light branched by the light branching unit, a reflection type image generation unit performing spatial light modulation by receiving the part of light from the light branching unit and reflecting the received light, a signal conversion unit converting a detection signal from the light detection unit and outputting the converted signal, a control unit receiving the converted signal and controlling output power of the image light based on the converted signal of the image light, and a refresh unit capable of refreshing the converted signal input to the control unit.

### Advantageous Effects of Invention

The invention can output light having a desired light intensity even when the light intensity characteristics of a light source change in a broad brightness range spanning from low brightness to high brightness.

### Brief Description of Drawings

[Fig. 1] Fig. 1 is a diagram illustrating how a HUD device according to an embodiment of the invention is installed.
[Fig. 2] Fig. 2 is a cross sectional view schematically illustrating the HUD device according to the above embodiment.
[Fig. 3] Fig. 3 is a cross sectional view schematically illustrating a light source device according to the above embodiment.
[Fig. 4] Fig. 4 is a diagram illustrating how a screen according to the above embodiment is scanned.
[Fig. 5] Fig. 5 indicates temporal changes in the scanning positions of the HUD device according to the above embodiment, Fig. 5(a) indicates temporal changes in the sub-scanning position, and Fig. 5(b) indicates temporal changes in the main scanning position.
[Fig. 6] Fig. 6 is an electric structural diagram illustrating the HUD device according to the above embodiment.
[Fig. 7] Fig. 7 is a diagram illustrating a signal conversion unit and a refresh unit according to the above embodiment.
[Fig. 8] Fig. 8 is an operational flowchart illustrating the light intensity correction processing of the HUD device according to the above embodiment.
[Fig. 9] Fig. 9 is a timing chart illustrating various signals according to the above embodiment.
[Fig. 10] Fig. 10 is a diagram illustrating an example of subframes SF obtained by time division of a frame F in a field sequential color system.
[Fig. 11] Fig. 11 is a flowchart illustrating an example of the operation of the refresh unit according to the embodiment of the invention and an example of a third detection signal output from the signal conversion unit.
[Fig. 12] Fig. 12 is a flowchart illustrating an example of the operation of the refresh unit according to the embodiment of the invention and an example of the third detection signal output from the signal conversion unit.

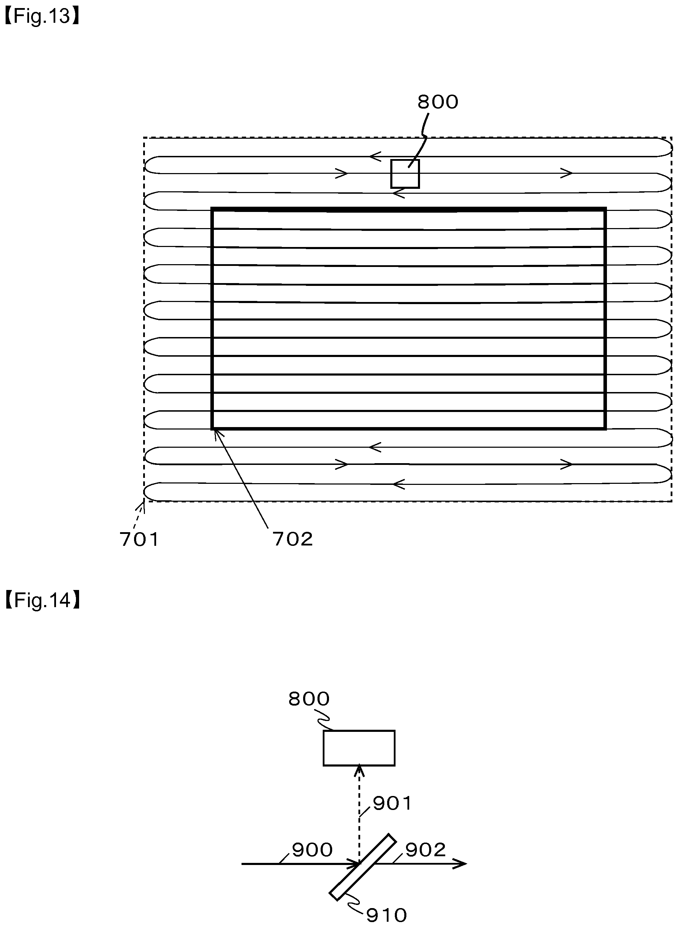

[Fig. 13] Fig. 13 is a diagram illustrating the disposition of a light detection unit in a conventional projection type display device.
[Fig. 14] Fig. 14 is a diagram illustrating the disposition of a light detection unit in a conventional projection type display device.

### Description of Embodiments

The following describes an embodiment in which a display device according to the invention is applied to a head-up display device (HUD device) to be installed in a vehicle with reference to the attached drawings.

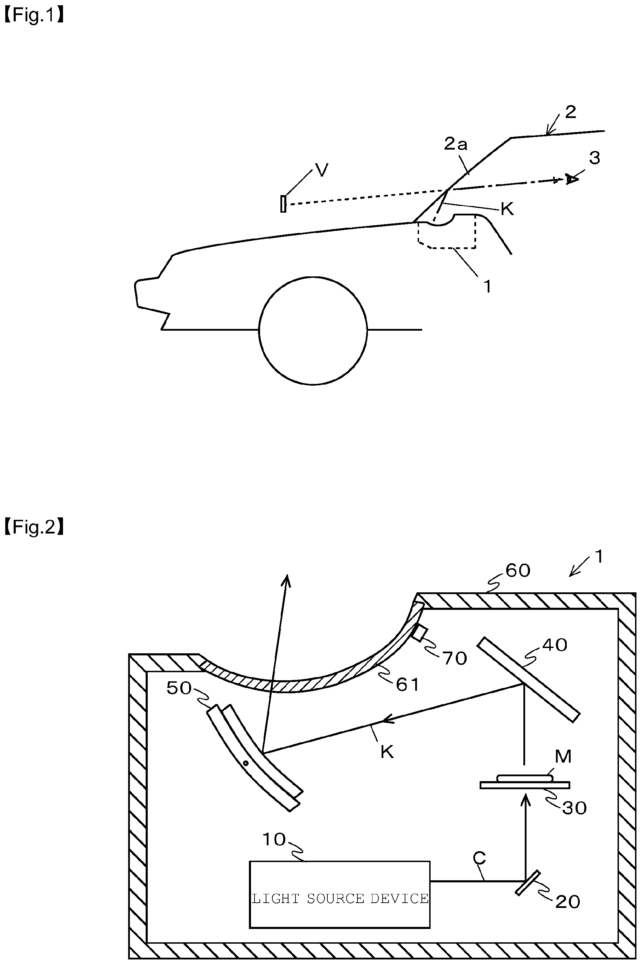

As illustrated in Fig. 1, a HUD device 1 according to the embodiment of the invention is disposed on the dash board of a vehicle 2 and emits display light K indicating an image M (see Fig. 2) reporting predetermined information toward a windshield 2a. The display light K reflected by the windshield 2a is visually identified by an observer 3 (mainly the driver of the vehicle 2) as a virtual image V formed in front of the windshield 2a. In this way, the HUD device 1 causes the observer 3 to visually identify the virtual image V.

As illustrated in Fig. 2, the HUD device 1 includes a light source device 10, a scanning unit 20, a screen 30, a first reflecting unit 40, a second reflecting unit 50, a cabinet 60, and an external light sensor 70.

### (Light source device 10)

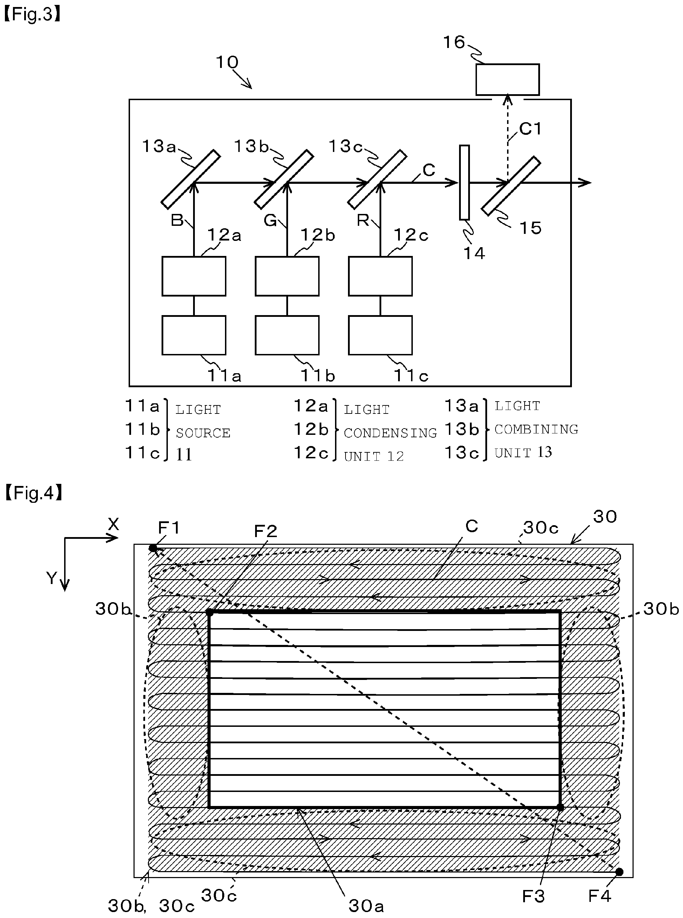

The light source device 10 emits combined laser light C, which will be described later, toward the scanning unit 20 and includes, as illustrated in Fig. 3, a light source 11, a light condensing unit 12, a light combining unit 13, a dimming unit 14, a light branching unit 15, and a light detection unit 16.

The light source 11 emits laser light having predetermined light intensities at predetermined timings under control of a light source control unit 100, which will be described later. The light source 11 includes a first light source 11a emitting blue laser light B, a second light source 11b emitting green laser light G, and a third light source 11c emitting red laser light R.

The light condensing unit 12 condenses the laser light B, the laser light G, and the laser light R emitted by the light sources 11a, 11b, and 11c to generate converged light with a small spot diameter and includes a first light condensing unit 12a condensing the blue laser light B, a second light condensing unit 12b condensing the green laser light G, and a third light condensing unit 12c condensing the red laser light R.

The light combining unit 13 combines the laser light B, the laser light G, and the laser light R that have been emitted from the light sources 11a, 11b, and 11c and reached the light combining unit 13 via the light condensing unit 12 by aligning their optical axes and outputs them as the combined laser light C. The light combining unit 13 includes a first light combining unit 13a for adjusting the optical axis of the blue laser light B, a second light combining unit 13b for adjusting the optical axis of the green laser light G, and a third light combining unit 13c for adjusting the optical axis of the red laser light R.

The dimming unit 14 includes a liquid crystal panel (not illustrated) and two polarizing filters (not illustrated) between which the liquid crystal panel is sandwiched. In addition, the dimming unit 14 changes the light transmission ratio of the combined laser light C by driving the liquid crystal panel via a dimming control unit 300, which will be described later, using a pulse amplitude modulation (PAM) system or pulse width modulation (PWM) system based on a dimming value set by a processing unit 401, and adjusts (dims) the light intensity of the combined laser light C having input to the dimming unit 14 to a desired light intensity. Note that the dimming unit 14 may be provided in each of the optical paths of the laser light R, the laser light G, and the laser light B before being combined instead of being disposed in the position in which the combined laser light C obtained by combining the laser light R, the laser light G, and the laser light B is received.

The light branching unit 15 is made of, for example, a transmission member having a reflectivity of approximately 5%, disposed in an optical path of the combined laser light C from the dimming unit 14 to the scanning unit 20, and transmits most of the combined laser light C from the dimming unit 14 as is while reflecting part of the light to the light detection unit 16, which will be described later, as reflected light C1.

The light detection unit 16 includes a photodiode or the like, receives the reflected light C1 reflected by the light branching unit 15, and detects the light intensities of the laser light B, the laser light G, and the laser light R of the received reflected light C1. The light detection unit 16 outputs a first detection signal P1 to a signal conversion unit 500, which will be described later, depending on the light intensities of the laser light B, the laser light G, and the laser light R of the received reflected light C1.

The scanning unit 20 receives the combined laser light C emitted from the light source device 10 and scans the received combined laser light C on the screen 30 in a sub-scanning direction Y while scanning it in a main scanning direction X a plurality of times as illustrated in Fig. 4 under control of a scanning control unit 200 described later, and displays the desired image M on the screen 30.

The screen 30 displays the image M on the front surface by receiving the combined laser light C from the scanning unit 20 on the back surface and transmitting and diffusing the combined laser light C, and includes a holographic diffuser, microlens array, diffusion plate, and the like.

The screen 30 is divided into an effective display area 30a surrounded by the bolded frame in Fig.4 and non-display areas (30b and 30c) indicated as shaded areas in Fig.4. The effective display area 30a can be visually identified by the observer 3 as the virtual image V (that is, the area that is reflected by the first reflecting unit 40 or the like and emitted to the outside as the display light K) and the non-display areas 30b and 30c cannot be visually identified by the observer 3. The non-display areas are disposed in the vicinity of turning points in the main scanning of the effective display area 30a and includes the intermittent non-display areas 30b (the areas to the left and right of the effective display area 30a in Fig. 4) to which the effective display area 30a is intermittently switched during the main scanning and the continuous non-display areas 30c (the areas above and below the effective display area 30a in Fig. 4) which are the areas outside the effective display area 30a to be scanned continuously during sub scanning.

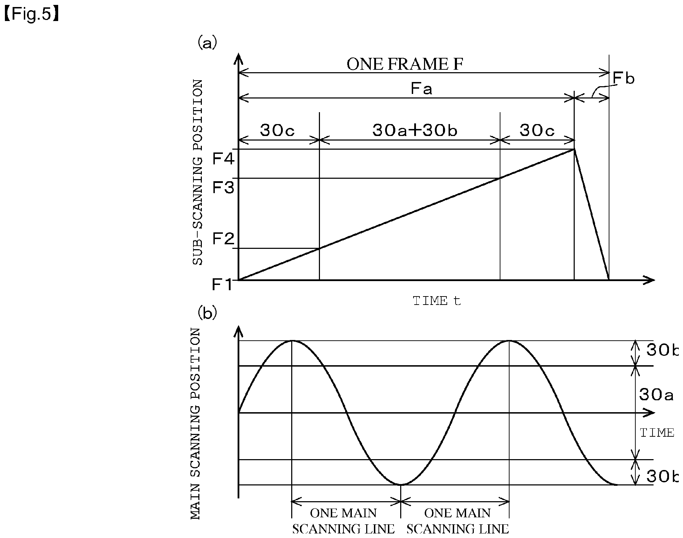

As illustrated in Fig. 4, the scanning unit 20 scans the combined laser light C from a scanning start position F1 to a scanning end position F4 of the screen 30 (see the solid line indicated by symbol C) and, when reaching the scanning end position F4, returns to the scanning start position F1 and performs scanning again. As illustrated in Fig. 5(a), the scanning period of the scanning unit 20 includes an actual scanning period Fa in which the effective display area 30a and the non-display areas (30b and 30c) are scanned and a retrace period Fb in which a return from the scanning end position F4 to the scanning start position F1 is performed. This frame cycle (one frame F) from when the scanning unit 20 starts scanning at the scanning start position F1 to when the scanning unit 20 reaches the scanning end position F4 and returns to the scanning start position F1 again through a display start position F2 and a display end position F3 in which the effective display area 30a is scanned is set to a value less than 1/60 second (equal to or more than 60 Hz), which is the critical fusion frequency at which a person can visually identify flicker.

The first reflecting unit 40 is configured by a plane mirror or the like, receives the display light K representing the image M displayed on the screen 30, and reflects the display light K to the second reflecting unit 50.

The second reflecting unit 50 is configured by a concave mirror or the like and reflects the display light K from the first reflecting unit 40 to the windshield 2a. The display light K reflected by the second reflecting unit 50 reaches the windshield 2a via a light transmission unit 61.

The cabinet 60 houses the light source device 10, the scanning unit 20, the screen 30, the first reflecting unit 40, the second reflecting unit 50, and the like and is formed by a light-shielding member. Part of the cabinet 60 is formed as the light transmission unit 61 through which the display light K transmits.

The light transmission unit 61 is made of translucent resin such as acrylic, allows the transmission of the display light K from the second reflecting unit 50, and is fitted into the cabinet 60. The light transmission unit 61 is curved to prevent the received external light from being reflected to the observer 3. In addition, the external light sensor 70 is provided on an internal surface of the light transmission unit 61 to detect the external illuminance of the HUD device 1 and output illuminance information to a main control unit 400, which will be described later.

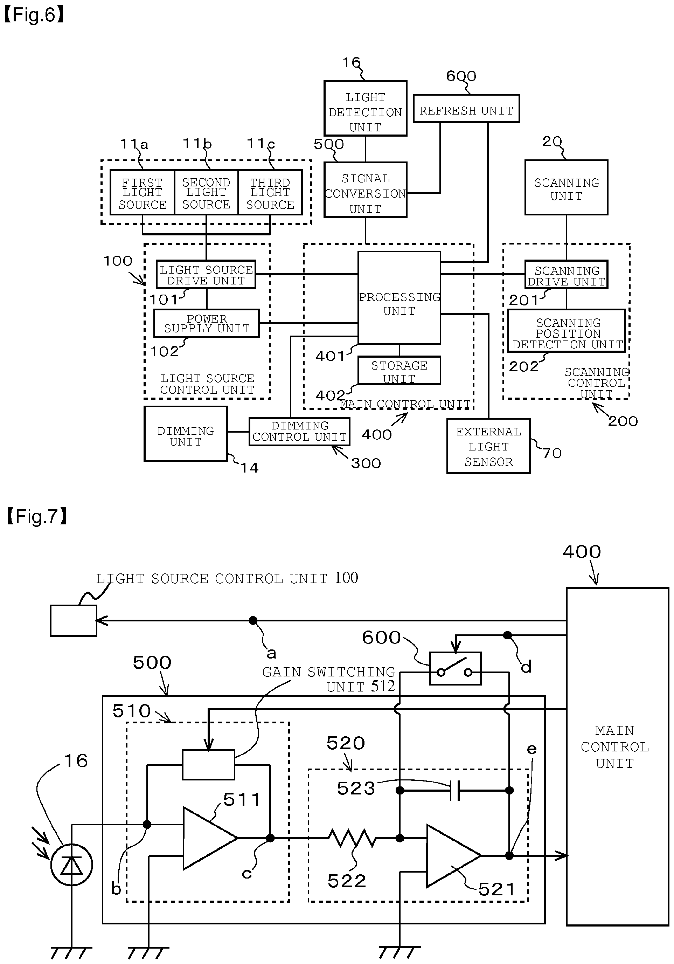

Next, the electric structure of the HUD device 1 will be described. In addition to the above components, the HUD device 1 includes the light source control unit 100, the scanning control unit 200, the dimming control unit 300, and the main control unit 400 controlling the light source control unit 100, the scanning control unit 200, and the dimming control unit 300, as illustrated in Fig. 6. These control units are mounted on, for example, a printed circuit board (not illustrated) provided in the cabinet 60. These control units may be provided outside the HUD device 1 and may be electrically connected to the light source 11 (the light sources 11a, 11b, and 11c), the dimming unit 14 (liquid crystal panel), the scanning unit 20, and the light detection units (16, 70, etc.) of the HUD device 1 by wiring.

The light source control unit 100 drives the light sources 11a, 11b, and 11c and includes a light source drive unit 101 and a power supply unit 102.

The light source drive unit 101 includes a driver IC and the like and drives the light sources 11a, 11b, and 11c using a PWM system or PAM system under control of the main control unit 400.

The power supply unit 102 supplies electric power to the light sources 11a, 11b, and 11c via the light source drive unit 101 and includes a switching circuit having a power supply IC, a transistor, and the like.

The scanning control unit 200 drives the scanning unit 20 and includes a scanning drive unit 201 and a scanning position detection unit 202.

The scanning drive unit 201 includes a driver IC and the like and drives the scanning unit 20 under control of the main control unit 400.

The scanning position detection unit 202 calculates feedback data and outputs the feedback data to the main control unit 400. The feedback data output from the scanning position detection unit 202 is scanning position data such as main scanning switching data indicating the timing at which reciprocating motion of main scanning is switched and frame switching data indicating the timing at which frames are switched.

A processing unit 401 counts the number of main scanning lines by counting, for example, signals of main scanning switching data of the feedback data input from the scanning drive unit 201, identifies the sub-scanning position of the scanning unit 20 based on the counted number of main scanning lines, and performs the processing that is based on the sub-scanning position. In addition, the processing unit 401 resets the counted number of main scanning lines according to the signal input of frame switching data, which is feedback data input from the scanning position detection unit 202, and starts counting the number of main scanning lines of a new frame.

The dimming control unit 300 includes a driver IC driving the liquid crystal panel and the like and drives the dimming unit 14 based on an instruction signal from the main control unit 400.

The main control unit 400 includes the processing unit 401, a storage unit 402, and an AD conversion unit (not illustrated). The processing unit 401 includes one or more microprocessors, controllers, microcontrollers, ASICs, FPGAs, other ICs, and the like that are not illustrated and the storage unit 402 includes one or more memories capable of storing programs and data, such as a RAM which is a rewritable memory, a ROM which is a read-only memory, an EEPROM which is an electrically erasable programmable read only memory, a flash memory which is a non-volatile memory that are not illustrated.

The processing unit 401 controls each unit by reading a program from the storage unit 402 and executing the program. The processing unit 401 causes the light sources 11a, 11b, and 11c to emit inspection light, detects the light intensity of the inspection light using the light detection unit 16, corrects the driving of the light sources 11a, 11b, and 11c based on the voltage level of a third detection signal P3 obtained by converting the first detection signal P1 using the signal conversion unit 500 which will be described later, and causes the light sources 11a, 11b, and 11c to output desired light intensities. In addition, the processing unit 401 receives vehicle information and the like from an ECU of the vehicle (not illustrated) and generates image data in sync with scanning by the scanning unit 20 based on the vehicle information output from the ECU of the vehicle and the like. The processing unit 401 outputs the generated image data to the light source drive unit 101 as an image signal and drives the light sources 11a, 11b, and 11c with desired output intensities at desired timings.

The processing unit 401 receives external illuminance from the external light sensor 70, determines the dimming value based on the external illuminance, and controls the dimming unit 14. Based on dimming by the dimming unit 14, the intensity of inspection light received by the light detection unit 16 changes. In addition, the inspection light emitted by the light sources 11a, 11b, and 11c is, for example, light that has the maximum brightness set for the light sources 11a, 11b, and 11c. Since the image M with high brightness is displayed when the external illuminance is high (bright), the dimming value of the dimming unit 14 is set to a high value and the light intensity of inspection light received by the light detection unit 16 increases. Since the image M with low brightness is displayed when the external illuminance is low (dark), the dimming value of the dimming unit 14 is set to a low value and the light intensity of inspection light received by the light detection unit 16 reduces.

In addition, the processing unit 401 amplifies the first detection signal P1 from the light detection unit 16 by controlling a gain switching unit 512, which will be described later. Specifically, when the light detection unit 16 receives the inspection light reduced to low brightness by the dimming unit 14, since the first detection signal P1, which is the detection signal from the light detection unit 16, becomes small, the processing unit 401 amplifies the first detection signal P1 by controlling the gain switching unit 512, which will be described later. That is, the processing unit 401 adjusts the gain of the gain switching unit 512, which will be described later, based on the dimming state of the dimming unit 14.

In addition, the processing unit 401 is connected to a refresh unit 600, which will be described later, and activates or deactivates the refresh unit 600 according to the scanning position of the scanning unit 20 input from the scanning position detection unit 202.

As illustrated in Fig. 7, the signal conversion unit 500 includes an amplifying circuit 510 and an integration circuit 520 and outputs the third detection signal P3 obtained by amplifying and integrating the first detection signal P1 from the light detection unit 16 to the main control unit 400. The amplifying circuit 510 is connected to the light detection unit 16 and converts the first detection signal P1 (electric current) from the light detection unit 16 to a second detection signal P2 (voltage signal) by amplifying the first detection signal P1 at a predetermined scaling factor under control of the main control unit 400 and the integration circuit 520 integrates the second detection signal P2 from the amplifying circuit 510 and outputs the integrated second detection signal P2 as the third detection signal P3 to the main control unit 400. As described later, the refresh unit 600 is connected to the signal conversion unit 500 (integration circuit 520) . The refresh unit 600 refreshes the third detection signal P3 to be output to the main control unit 400 at the timing at which the main control unit 400 makes control.

The amplifying circuit 510 includes a first operational amplifier 511 and the gain switching unit 512 connected in parallel with the first operational amplifier 511 and outputs the second detection signal P2 obtained by amplifying the first detection signal P1 from the light branching unit 15 to the integration circuit 520 by switching the gain of the gain switching unit 512 under control of the main control unit 400.

When displaying the image M with high brightness (high brightness mode), the main control unit 400 inputs inspection light having high output power to the light detection unit 16 by setting the dimming value of the dimming unit 14 to a high value to increase the transmission ratio. In this case, since the first detection signal P1 output by the light branching unit 15 becomes large, the main control unit 400 sets the gain of the gain switching unit 512 to a low value. In addition, when displaying the image M with low brightness (low brightness mode), the main control unit 400 outputs inspection light having high output power to the light detection unit 16 by setting the dimming value of the dimming unit 14 to a high value to increase the transmission ratio. In this case, since the first detection signal P1 output by the light branching unit 15 becomes small, the main control unit 400 sets the gain of the gain switching unit 512 to a high value.

The integration circuit 520 includes a second operational amplifier 521 integrating the second detection signal P2 from the amplifying circuit 510 and outputting the third detection signal P3 to the main control unit 400, a resistor 522, a capacitor 523, and the like. The refresh unit 600 for performing connection or disconnection between the input terminal and the output terminal of the second operational amplifier 521 under control of the main control unit 400 is connected to the second operational amplifier 521.

The refresh unit 600 performs connection or disconnection between the input terminal and the output terminal of the second operational amplifier 521 under control of the main control unit 400. When the main control unit 400 activates the refresh unit 600, the refresh unit 600 sets the third detection signal P3 to 0 volts through an imaginary short by connecting the input terminal of the second operational amplifier 521 to the output terminal. In contrast, when the main control unit 400 deactivates the refresh unit 600, the refresh unit 600 disconnects the input terminal of the second operational amplifier 521 from the output terminal. Then, the second operational amplifier 521 integrates the received second detection signal P2 and outputs the third detection signal P3 from the output terminal to the main control unit 400. That is, when the refresh unit 600 is active, the voltage level of the third detection signal P3 to be input to the main control unit 400 is forcibly set to 0 volts. When the refresh unit 600 is inactive, the voltage level of the third detection signal P3 to be input to the main control unit 400 is time-integrated and increased over time. The main control unit 400 detects the peak voltage level of the third detection signal P3 from the integration circuit 520 and corrects the control of the light source 11.

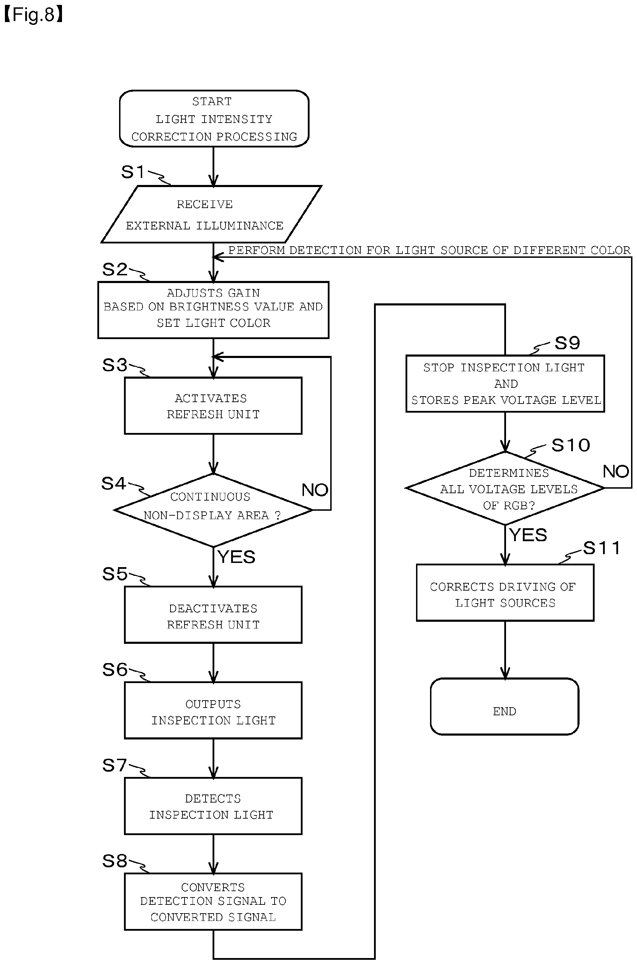

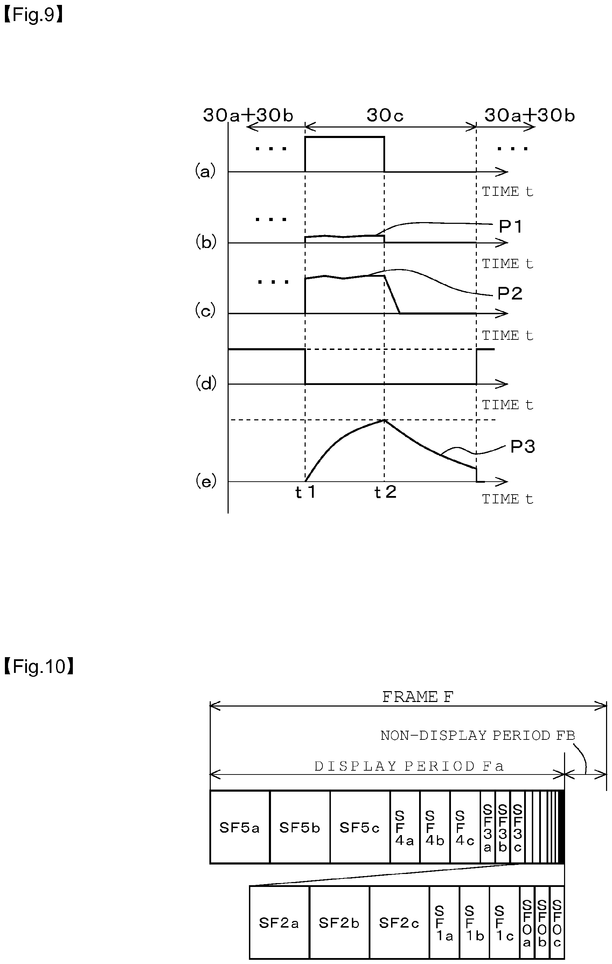

The electric structure of the HUD device 1 according to the embodiment has been described above. The following describes light intensity correction processing for correcting the driving of the light source 11 to cause the light source 11 to output desired light with reference to Figs. 8 and 9. Fig. 8 is a flowchart of light intensity correction processing for correcting the light intensity of the light source 11 and Fig. 9 is a timing chart of signals. Signals a to e in Fig. 9 correspond to voltage levels a to e in Fig. 7.

First, in step S1, the processing unit 401 receives external illuminance from the external light sensor 70, reads the brightness value of the image M appropriate for the received external illuminance from the storage unit 402, and sets the brightness value. Next, in step S2, the processing unit 401 reads the gain based on the determined brightness value and the set light color of the light source 11 from the storage unit 402 and adjusts the gain of the gain switching unit 512. In addition, in step S3, the processing unit 401 activates the refresh unit 600. This sets the converted signal from the integration circuit 520 to be input to the main control unit 400 to 0 volts.

Next, in step S4, the processing unit 401 detects the scanning position of the scanning unit 20 from the scanning position detection unit 202 to determine whether the scanning position is in the continuous non-display area 30c. When the scanning position is not in the continuous non-display area 30c (NO in step S4), scanning continues while activating the refresh unit 600. In contrast, when the scanning position is in the continuous non-display area 30c (YES in step S4), the processing unit 401 deactivates the refresh unit 600 in step S5.

In step S6, the processing unit 401 outputs a driving signal as illustrated in Fig. 9(a) to cause the light source 11 of the set color of the light sources 11a, 11b, and 11c to output inspection light via the light source control unit 100. Then, in step S7, the light detection unit 16 detects the inspection light and outputs the first detection signal P1 as illustrated in Fig. 9(b) to the signal conversion unit 500 (amplifying circuit 510).

In step S8, the signal conversion unit 500 converts the first detection signal P1 input from the light detection unit 16 to the third detection signal P3 and outputs the third detection signal P3 to the main control unit 400. Specifically, the amplifying circuit 510 converts the first detection signal P1 input from the light detection unit 16 to the second detection signal P2 (see Fig. 9 (c) ) by amplification based on the gain value set in step S2 and outputs the second detection signal P2 to the integration circuit 520. Then, the integration circuit 520 integrates the second detection signal P2 from the amplifying circuit 510 and outputs the integrated second detection signal P2 as the third detection signal P3 (see Fig. 9(e)) to the main control unit 400.

In step S9, the processing unit 401 causes the light source 11 to output inspection light for a predetermined period (time t1 to time t2 in Fig. 9) and then stop the output of the inspection light. This stops the output of the first detection signal P1 from the light detection unit 16 as illustrated in Fig. 9(b), so the third detection signal P3 output from the integration circuit 520 gradually reduces over time. The processing unit 401 receives the third detection signal P3 input from the integration circuit 520 as a digital signal via an AD conversion unit (not illustrated) and temporarily stores the peak voltage level of the third detection signal P3 in the storage unit 402. Since the peak voltage level of the third detection signal P3 appears at the timing (time t2) at which the inspection light is turned off as illustrated in Fig. 9 (e) , the processing unit 401 desirably stores the voltage level of the third detection signal P3 at the timing at which the inspection light is turned off in the storage unit 402 temporarily. In this structure, it is possible to easily obtain the peak of the third detection signal (converted signal) P3 having a low signal-to-noise (SIN) ratio and accurately detect the light intensity of the inspection light.

In step S10, the processing unit 401 determines whether all voltage levels of red light, green light, and blue light have been obtained. When all voltage levels of red light, green light, and blue light have not been obtained (NO in step S10), the processing returns to step S2 to perform detection for the light source 11 of a different color. In contrast, when all voltage levels of red light, green light, and blue light have been obtained (YES in step S10), the processing unit 401 corrects the driving of the light sources 11a, 11b, and 11c so that the image M appropriate for external illuminance can be displayed with desired brightness and desired white balance.

Light intensity correction processing has been described above. This processing can be described briefly below.
- First, the brightness value for displaying the image M is set based on external illuminance and then the third signal P3 to be input to the main control unit 400 is refreshed (set to 0 volts) using the refresh unit 600.
- A determination is made as to whether the scanning position of the scanning unit 20 is in the continuous non-display area 30c. When the scanning unit 20 is in the continuous non-display area 30c, the refresh unit 600 is deactivated and the first detection signal P1 of inspection light output from the light source 11 is converted by the signal conversion unit 500 and the converted first detection signal P1 is input as the third detection signal P3.
- The driving of the light sources 11a, 11b, and 11c is corrected based on the input third detection signal P3.

In the HUD device 1 described above according to the embodiment, the light detection unit 16 detects the inspection light having light intensity for generating the image M appropriate for external illuminance and corrects the control of the light source 11 based on this, so the brightness and white balance of the image M can be adjusted accurately.

In addition, since light from the light source 11 can be branched by the light branching unit 15 and part of the branched color light can be input to the light detection unit 16, enough time can be taken to detect light intensity.

In addition, since the amplifying circuit 510 can amplify the first detection signal P1 generated by the light detection unit 16 based on the output power of inspection light, even when receiving inspection light having low light intensity to generate the image M with low brightness, the amplifying circuit 510 can increase the signal strength and the light intensity can be detected accurately.

In addition, since the integration circuit 520 integrates the detection signal, the detection signal can be averaged and the light intensity can be detected more accurately.

In addition, even when the light detection unit 16 constantly receives light from the light source 11 as in the embodiment, since the refresh unit 600 refreshes the detection signal before detection of inspection light from the light source 11, it is possible to prevent the intensity of light other than the inspection light from affecting the detection signal, thereby enabling the accurate detection of light intensity.

In addition, since the light intensity of the detection light is detected when the scanning position of the scanning unit 20 is in the continuous non-display area 30c in which the effective display area 30a is not scanned continuously, enough time can be taken to accurately detect the light intensity of the inspection light.

In addition, since all colors are not detected for each frame, enough time can be taken for each frame F to accurately detect the light intensity of the inspection light.

### [Modification]

The invention is not limited by the above embodiments or the above drawings. Changes (including deletion of components) can be made to the embodiments and drawings as appropriate within the spirit of the invention. Examples of modifications will be described below.

Although the brightness and white balance of the image M are adjusted by correcting the driving of the light sources 11a, 11b, and 11c based on the detection signal from the light detection unit 16 in the above embodiment, the brightness and white balance of the image M may be adjusted by correcting the driving of the dimming unit 14 based on the detection signal from the light detection unit 16 and the driving of the light source 11 and the dimming unit 14 may be corrected based on the detection signal.

In addition, although the processing unit 401 refreshes the third detection signal P3 to be input from the signal conversion unit 500 to the processing unit 401 while not driving the light sources 11a, 11b, and 11c using the detection signal in the above embodiment, the processing unit 401 only needs to refresh the third detection signal P3 at least before the processing unit 401 obtains the peak voltage level of the third detection signal P3. Specifically, the processing unit 401 only needs to refresh the third detection signal P3 to be received, for example, before obtaining the peak voltage level of the third detection signal P3 during driving of the light sources 11a, 11b, and 11c using the detection signal when the scanning position of the scanning unit 20 is present between (in the continuous non-display area 30c) the display end position F3 and the next display start position F2.

In addition, the timing at which the processing unit 401 drives the refresh unit 600 may be, for example, the timing that is based on an image signal used by the HUD (display device) 1 to drive the light sources 11a, 11b, and 11c for generation of the image M. Specifically, the processing unit 401 only needs to refresh the third detection signal P3 to be received before, for example, obtaining the peak voltage level of the third detection signal P3 after driving the light sources 11a, 11b, and 11c using the image signal.

If the processing unit 401 starts refreshing the third detection signal P3 to be received when the scanning position of the scanning unit 20 reaches the display end position F3 or immediately after the light sources 11a, 11b, and 11c are driven by the image signal, the third detection signal P3 can be surely reduced, the light sources 11a, 11b, and 11c can be driven by the detection signal, and the peak voltage level of the third detection signal P3 having low noise can be obtained.

Although the timing at which the refresh unit 600 is deactivated is the same as the timing at which the light source 11 outputs the inspection light in the embodiment, the invention is not limited to the embodiment and the refresh unit 600 may be deactivated after the light source 11 starts outputting the inspection light. Since this structure prevents the detection signal of unstable light when the light source 11 starts emission from entering the main control unit 400 and the light intensity can be detected more accurately.

In addition, the dimming unit 14 may be provided in the optical path of each of the laser light B, the laser light G, and the laser light R before being combined, instead of the optical path of the combined laser light C and this structure allows the dimming control of the laser light B, the laser light G, and the laser light R individually.

In addition, although the main scanning by the scanning unit 20 is counted to determine the timing at which various types of control processing of image adjustment processing are performed in the above embodiment, any other methods of, for example, counting the scanning time may be used to detect the scanning position.

In addition, although the above embodiment uses an example in which the scanning unit 20 for scanning the combined laser light C from the light source 11 is used as an image generation unit for generating the image M, by replacing the first light source 11a emitting blue light, the second light source 11b emitting green light, and the third light source 11c emitting red light with, for example, light sources such as LEDs having larger spot diameters as the light source 11, the light source device 10 according to the invention can be used as a light source device for a reflection type image generation unit such as DMD or LCos (registered trademark) or a transmission type image generation unit such as TFT. An example of applying the light source device 10 according to the invention to the light source device of the reflection type image generation unit will be described below.

The light source device 10 according to the invention applied as the light source device of the reflection type image generation unit or transmission type image generation unit is driven by a field sequential color (FSC) system and illuminates the light sources 11a, 11b, and 11c in a time division manner within one frame F.

Fig. 10 illustrates an example of subframes SF obtained by time-dividing the frame F in a field sequential color system. As illustrated in Fig. 10, the light source device 10 to be applied to the reflection type image generation unit has, for example, a display period Fa in which the light sources 11a, 11b, and 11c are illuminated in a time division manner to generate the image M and a non-display period Fb in which the light sources 11a, 11b, and 11c are turned off in one frame F. The display period Fa includes, for example, six unequal subframes (SF5a to SF0a) for causing the light source 11a to emit blue light, six unequal subframes (SF5b to SF0b) for causing the light source 11b to emit green light, and six unequal subframes (SF5c to SF0c) for causing the light source 11c to emit red light so as to represent 64 shades of gray for each color.

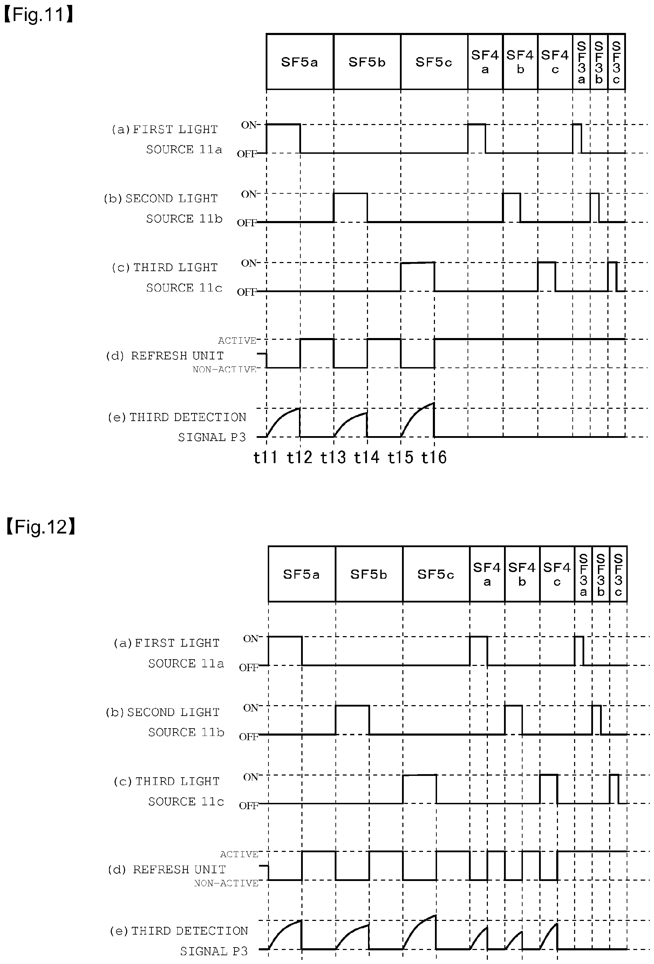

Fig. 11 is a flowchart illustrating an example of the operation of the refresh unit 600 in the frame F and an example of the third detection signal P3 output from the signal conversion unit 500. In Figs. 11, (a), (b), and (c) indicate the turn-on and turn-off of the light sources 11a, 11b, and 11c, Fig. 11 (d) indicates whether the refresh unit 600 is active or inactive, and Fig. 11 (e) indicates the voltage level of the third detection signal P3 input to the processing unit 401. Although subframes SF in the frame F are arranged in descending order of the period in Fig. 11 to make description easy, the order of arrangement of subframes SF is not limited to this example.

In the light source device 10 according to the embodiment, as illustrated in Fig. 11, the light sources 11a, 11b, and 11c are driven in the subframes SF5a, SF5b, SF5c .... Note that the ratio of the periods for driving the light sources 11a, 11b, and 11c to the subframes SF5a, SF5b, SF5c ... depends on the brightness of the virtual image V to be needed.

In the period from time t11 to time t12 in which the light source 11a emits blue light, the processing unit 401 deactivates the refresh unit 600. This outputs the third detection signal P3 that is based on the intensity of blue light detected by the light detection unit 16 to the processing unit 401 from the signal conversion unit 500. The processing unit 401 stores the voltage level of the third detection signal P3 at a predetermined timing in the storage unit 402. Specifically, for example, the processing unit 401 temporarily stores the peak voltage level immediately before the third detection signal P3 is refreshed by the refresh unit 600 in the storage unit 402.

Next, in the period from time t12 at which the driving of the light source 11a stops to time t13 at which the light source 11b emits green light, the processing unit 401 activates the refresh unit 600. This refreshes the third detection signal P3.

Next, in the period from time t13 to time t14 in which the light source 11b emits green light, the processing unit 401 deactivates the refresh unit 600. This outputs the third detection signal P3 that is based on the intensity of green light detected by the light detection unit 16 to the processing unit 401 from the signal conversion unit 500. The processing unit 401 temporarily stores the voltage level of the third detection signal P3 at a predetermined timing in the storage unit 402.

Then, in the period from time t14 at which the driving of the light source 11b stops to time t15 at which the light source 11c emits red light, the processing unit 401 activates the refresh unit 600. This refreshes the third detection signal P3.

Next, in the period from time t15 to time t16 in which the light source 11c emits red light, the processing unit 401 deactivates the refresh unit 600. This outputs the third detection signal P3 that is based on the intensity of red light detected by the light detection unit 16 to the processing unit 401 from the signal conversion unit 500. The processing unit 401 temporarily stores the voltage level of the third detection signal P3 at a predetermined timing in the storage unit 402.

Then, until the light source 11a in the next frame F emits blue light after the driving of the light source 11c stops, the processing unit 401 activates the refresh unit 600. This refreshes the third detection signal P3.

The processing unit 401 determines whether all voltage levels of red light, green light, and blue light have been obtained. When all voltage levels of red light, green light, and blue light have been obtained, the processing unit 401 corrects the driving of the light sources 11a, 11b, and 11c so that the image M appropriate for external illuminance can be displayed with desired brightness and desired white balance. The correction of the driving of the light sources 11a, 11b, and 11c means the adjustment of the voltage levels for driving the light sources 11a, 11b, and 11c and/or the adjustment of the ratio of the periods for driving the light sources 11a, 11b, and 11c to the subframes SF5a, SF5b, SF5c ....

As illustrated in Fig. 11, the subframes SF for detecting the light intensities of the light sources 11a, 11b, and 11c are desirably the longest subframes SF. This lengthens the period for generating a light detection signal and improves the accuracy of the detection of the light intensity.

Although the voltage level that is based on the light intensity of each color is obtained once for each frame F in the example illustrated in Fig. 11, the inventions is not limited to the example and the voltage levels that are based on the light intensities may be obtained in a plurality of subframes SF and the driving of the light sources 11a, 11b, and 11c may be corrected by averaging the voltage levels. This further improves the accuracy of the detection of the light intensity.

In addition, although light detection is performed while the image M is generated by using a transmission film (light branching means) in the above embodiment, a light intensity L may be detected while the light used to generate the image M is transmitted by providing a transmission type light detection unit. However, the dependency of the transmission ratio on the wavelength needs to be considered for each color in the case of a transmission type light detection unit, it is desirable to provide the light branching means as in the above embodiment.

### Industrial Applicability

The light source device and the display device according to the invention are applicable particularly to an image display device installed in a movable body or the like in which the illuminance of use environment easily changes or a light source device used in such a display device and, more specifically, to, for example, the meter, head-up display, or head-mount display of the movable body.

### Reference Signs List

- 1:: HUD device (display device)
- 2:: vehicle
- 2a:: windshield
- 3:: observer
- 10:: light source device
- 11:: light source
- 12:: light condensing unit
- 13:: light combining unit
- 14:: dimming unit
- 15:: light branching unit
- 16:: light detection unit
- 20:: scanning unit
- 30:: screen
- 40:: first reflecting unit
- 50:: second reflecting unit
- 60:: cabinet
- 70:: external light sensor
- 100:: light source control unit
- 200:: scanning control unit
- 300:: dimming control unit
- 400:: main control unit
- 500:: signal conversion unit
- 510:: amplifying circuit
- 511:: first operational amplifier
- 512:: gain switching unit
- 520:: integration circuit
- 521:: second operational amplifier
- 522:: resistor
- 523:: capacitor
- 600:: refresh unit
- C:: combined laser light
- C1:: first reflected light
- C2:: second reflected light
- F:: frame
- Fa:: actual scanning period
- Fb:: retrace period
- F1:: scanning start position
- F2:: display start position
- F3:: display end position
- F4:: scanning end position
- K:: display light
- M:: image
- P1:: first detection signal (detection signal)
- P2:: second detection signal (converted signal)
- P3:: third detection signal (converted signal)
- V:: virtual image

## Claims

1. A light source device comprising:
a light source capable of emitting at least image light having output power that is based on an image signal;
a light branching unit branching light from the light source;
a light detection unit detecting a light intensity of the light branched by the light branching unit;
a signal conversion unit converting a detection signal from the light detection unit and outputting the converted signal;
a control unit controlling output power of the image light based on the input converted signal; and
a refresh unit refreshing the converted signal input to the control unit.

2. The light source device according to claim 1,
wherein the control unit controls the light source based on the input converted signal after being refreshed by the refresh unit.

3. The light source device according to claim 1 or 2,
wherein the signal conversion unit outputs the converted signal obtained by integrating the detection signal from the light detection unit.

4. The light source device according to any one of claims 1 to 3,
wherein the signal conversion unit includes an amplifying circuit outputting the converted signal obtained by amplifying the detection signal from the light detection unit based on a gain, the amplifying circuit being capable of adjusting the gain.

5. The light source device according to any one of claims 1 to 4, controlling the output power of the image light based on a peak voltage level of the converted signal.

6. The light source device according to any one of claims 1 to 5,
wherein the light source is capable of outputting inspection light that is not based on the image signal and
the control unit controls the output power of the image light based on the converted signal of the inspection light.

7. The light source device according to claim 6,
wherein the refresh unit releases refreshing after the light source starts outputting the inspection light.

8. A display device comprising:
the light source device according to any one of claims 1 to 7;
a scanning unit scanning light emitted from the light source device in a second direction while reciprocally scanning the light emitted from the light source device in a first direction a plurality of times; and
scanning position detection means detecting a scanning position of the scanning unit,
wherein the refresh unit refreshes the converted signal input to the control unit at a timing that is based on the scanning position of the scanning unit detected by the scanning position detection means.

9. A display device comprising:
the light source device according to any one of claims 1 to 5; and
a reflection type image generation unit performing spatial light modulation by reflecting the light emitted from the light source device.
